(19) Europäisches Patentamt
European Patent Office
Office européen des brevets

(11) EP 1 479 702 A1

(12) **DEMANDE DE BREVET EUROPEEN**

(43) Date de publication:
**24.11.2004 Bulletin 2004/48**

(51) Int Cl.[7]: **C08F 234/02**, C08F 214/18, C08F 214/28

(21) Numéro de dépôt: **04291182.6**

(22) Date de dépôt: **07.05.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **19.05.2003 FR 0305947**

(71) Demandeur: **Atofina**
**92800 Puteaux (FR)**

(72) Inventeurs:
- **Pascal, Thierry**
**69300 Charly (FR)**
- **Boutevin, Bernard**
**34080 Montpellier (FR)**
- **Kostov, Georges**
**34080 Montpellier (FR)**
- **Rousseau, Alain**
**34000 Montpellier (FR)**
- **Alric, Jérôme**
**69004 Lyon (FR)**
- **Fournier, Jérôme**
**69003 Lyon (FR)**

(74) Mandataire: **Neel, Henry et al**
**Atofina**
**D.C.R.D./D.P.I.**
**4, Cours Michelet**
**La Défense 10**
**92091 Paris La Défense Cedex (FR)**

(54) **Polymères à base de chlorotrifluoroéthylène/carbonate de vinylène/hexafluoropropène ou tétrafluoroéthylène/carbonate de vinylène/hexafluoropropène**

(57) L'invention a pour objet un copolymère comprenant au moins 3 motifs P1, P2 et P3 de formules générales suivantes :

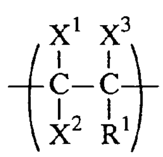

P1

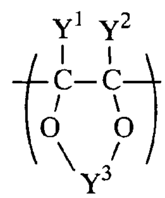

P2

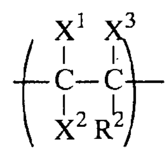

P3

avec $X^1$, $X^2$ et $X^3$ identiques ou différents, pris dans le groupe d'atomes comprenant H, F, Cl et Br ;avec $R^1$ pris dans le groupe d'atomes comprenant H, F, Cl et Br ;
avec $R^2$ un groupement carboné comprenant de 1 à 10 atomes de carbone partiellement ou totalement fluorés ;
avec $Y^1$ et $Y^2$, identiques ou différents, pris soit dans le groupe d'atomes comprenant H, F, Cl et Br, soit dans la famille des groupements carbonés comprenant de 1 à 10 atomes de carbone ;
avec $Y^3$ un groupement carbonyle ou un groupement carboné divalent ;
la teneur en motif P2 dans le copolymère étant comprise entre 30 et 70% molaire pour respectivement une teneur en motifs P1 et P3 dans le copolymère comprise entre 70 et 30% molaire et la masse molaire moyenne en poids (Mw) dudit copolymère étant comprise entre $10^3$ et $10^6$ g/mole. De préférence, on a un copolymère de type CTFE/VCA/HFP ou TFE/VCA/HFP.

EP 1 479 702 A1

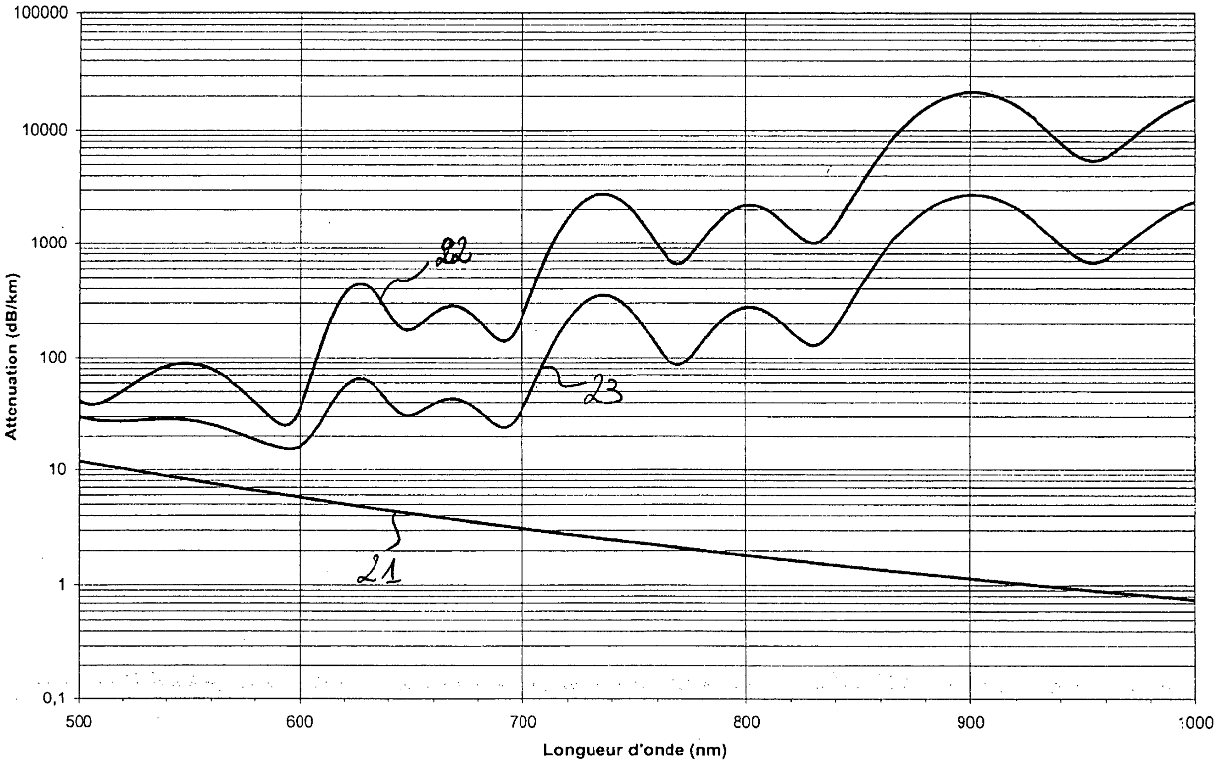
100000
10000
1000
100
10
1
0,1
Attenuation (dB/km)
500
600
700
800
900
1000
Longueur d'onde (nm)
22
23
21

FiG. 2

## Description

La présente invention a pour objet un oligomère qui est un copolymère permettant la réalisation de formulations utilisables pour la fabrication d'objets transparents présentant une température de transition vitreuse supérieure à 60°C, ces objets pouvant en particulier servir de guide ou de conducteur de la lumière de longueurs d'ondes de type visible ou proche infra rouge. L'invention concerne également les procédés de synthèse de l'oligomère cité ci-dessus.
Avantageusement le copolymère, objet de l'invention, est un terpolymère issu de la copolymérisation :

- du carbonate de vinylène (VCA),
- d'hexafluoropropène (HFP), et
- de chlorotrifluoroéthylène (CTFE) ou de tétrafluoroéthylène (TFE).

Il est d'un grand intérêt de concevoir un matériau polymère possédant les propriétés nécessaires pour réaliser des fibres optiques. On pourra, à cet effet, se référer à l'article "Polymeric materials for Devices in Optical Fibre Systems" de Anthony R. Blythe et John R. Vinson (Polymers for advanced technologies vol 11, pages 601-611, 2000).
Pour la fabrication de fibres optiques, on connaît déjà des polymères amorphes, perfluorés, dérivés de monomères cycliques perfluorés, présentant des températures de transition vitreuse supérieures à 100°C. Cependant, la synthèse de ces monomères cycliques perfluorés est délicate et longue (plusieurs étapes de synthèse). Elle nécessite l'emploi d'agents de fluoration dangereux limitant leur accessibilité et conduisant à des prix de revient du polymère très élevés. (voir "TEFLON® AF Amorphous Fluoropolymers" Paul R. RESNICK, Warren H. BUCK "Modern Fluoropolymers, pages 397-398, Ed. John Scheires 1997 John Wiley & Sons Ltd).
D'autre part, ces polymères fluorés sont difficilement solubles dans les solvants usuels ce qui implique l'utilisation de solvants fluorés avec les inconvénients que cela représente.
Les polymères d'entité répétitive -($CF_2$-CFX)- dans laquelle X=F, Cl ou Br ont une température de transition vitreuse (Tg), température à partir de laquelle des mouvements limités des chaînes polymériques sont possibles, peu élevée. Leur Tg est proche de la température ambiante, ce qui ne permet pas d'assurer une parfaite stabilité des propriétés optiques dans les conditions thermiques ou climatiques d'utilisation des matériaux.
Il est également connu dans la littérature (M.Krebs et C. Schneider, Adv. Chem. Ser vol 142, pages 92 -98, 1975) un copolymère statistique issu de la copolymérisation du chlorotrifluoroéthylène (CTFE) et du carbonate de vinylène (VCA) de masse moléculaire (Mn) = 2000 se présentant sous forme d'un solide blanc incompatible avec une application optique.
Les polymères fluorés développés jusqu'à présent font appel à des monomères ou des oligomères difficiles d'accès soit par le nombre d'étapes nécessaires pour leur synthèse, soit par le danger qu'engendre l'utilisation d'agents de fluoration ou par leur prix. D'autre part, les matériaux fluorés dérivés présentent une tenue thermomécanique insuffisante.
On voit donc qu'aucun polymère fluoré ou partiellement fluoré développé jusqu'à présent n'est pleinement satisfaisant.
De plus, il est particulièrement important dans le domaine des fibres optiques de disposer d'un polymère présentant une très bonne miscibilité dans un diluant ou mélange de diluant permettant d'obtenir un matériau transparent à l'issue du procédé de filage défini dans le document EP 0990 509 ou EP-1 067 222. Ledit diluant utilisable pour le procédé de filage est un composé comprenant au moins un groupement fonctionnel photoréactif choisi dans le groupe formé par les (méth)acrylates d'alkyle et les composés vinyliques.
S'agissant des (méth)acrylates d'alkyle, on peut citer :

- De façon large les (méth)acrylates fluorés et plus particulièrement les α-fluoroacrylates, les α, β-difluoroacrylates et les dérivés acryliques des alcools et diols fluorés. On peut citer préférentiellement l'acrylate de trifluoroéthyle (abrégé ATRIFE) et le perfluorohexanedioldiacrylate.
- Les (méth)acrylates hydrogénés tels que l'hexanediol diacrylate (HDDA),le cyclohexanediméthanol diacrylate, le tricyclodécanediméthanol diacrylate (TCDDMDA), le triméthylolpropane triacrylate (TMPTA), ainsi que son dérivé ethoxylé (EtOTMPTA), le pentaérythrytol tétraacrylate (PETA), le ditriméthylolpropane tétraacrylate (di-TMPTA), les dérivés diacrylées de l'éthylene glycol (PEGDA), du néopentylglycol (NPGDA), du propylène glycol (DPGDA et TPGDA) et les dérivés triacrylés du glycérol (GPTA).

S'agissant des composés vinyliques, on peut citer les dérivés éthers vinyliques et les dérivés N-vinyliques comportant éventuellement un groupement partiellement chloré ou fluoré. On peut ajouter à ce groupe les dérivés maléimides, tel que le N-phényl maléimide.
Il a maintenant été trouvé par la demanderesse un copolymère incolore et transparent en solution, soluble dans les solvants usuels (acétone, THF, acétate d'éthyle, entre autres), de température de transition vitreuse supérieure à 60°C, obtenu à partir de monomères fluorés industriels, ces monomères fluorés étant avantageusement le chlorotrifluoroéthylène, le tétrafluoroéthylène et l'hexafluoroéthylène et à partir d'un carbonate éthylénique ou d'un acétal éthylénique, avantageusement le vinylène carbonate, monomère non halogéné facilement accessible. Ce copolymère présente les propriétés optiques et thermomécaniques requises pour des applications telles que :

- la fabrication d'articles conduisant la lumière, par exemple les fibres optiques ;
- la fabrication de revêtement ou films, par exemple antireflet ou encore ;
- la fabrication de photo masque.

Ce copolymère présente également l'avantage d'être soluble dans des solvants réactifs permettant l'élaboration de formulations transparentes compatibles avec un procédé de fabrication de fibres optiques par filage.
L'invention a pour objet un copolymère comprenant au moins 3 motifs P1, P2 et P3 de formules générales suivantes :

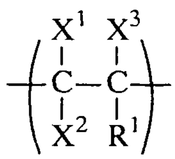

P1

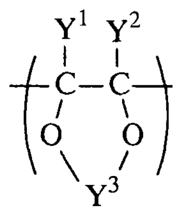

P2

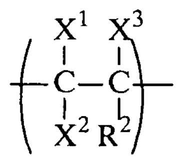

P3

avec $X^1$, $X^2$ et $X^3$ identiques ou différents, pris dans le groupe d'atomes comprenant H, F, Cl et Br ;
avec $R^1$ pris dans le groupe d'atomes comprenant H, F, Cl et Br ;
avec $R^2$ un groupement carboné comprenant de 1 à 10 atomes de carbone partiellement ou totalement fluorés ;
avec $Y^1$ et $Y^2$ ,identiques ou différents, pris soit dans le groupe d'atomes comprenant H, F, Cl et Br, soit dans la famille des groupements carbonés comprenant de 1 à 10 atomes de carbone ;
avec $Y^3$ un groupement carbonyle ou un groupement carboné divalent ;
la teneur en motif P2 dans le copolymère étant comprise entre 30 et 70% molaire pour respectivement une teneur en motifs P1 et P3 dans le copolymère comprise entre 70 et 30% et la masse molaire moyenne en poids (Mw) dudit copolymère étant comprise entre $10^3$ et $10^6$ g/mole.

Selon un mode de réalisation, ladite teneur en motifs P1 et P3 est telle qu'elle comprend de 99 à 30% molaire de motifs P1 avec $R^1$ un atome de F ou Cl pour 1 à 70% molaire de motifs P3 avec $R^2$ un groupe $CF_3$.

Selon un mode de réalisation, ladite teneur en motifs P1 et P3 est telle qu'elle comprend de 95 à 50% molaire de motifs P1 avec $R^1$ un atome de F ou Cl pour 5 à 50% molaire de motifs P3 avec $R^2$ un groupe $CF_3$.

Selon un mode de réalisation, le copolymère est caractérisé en ce que $X^1=X^2=X^3=F$.

Selon un mode de réalisation, le copolymère est caractérisé en ce que $Y^1$ et $Y^2$ sont des atomes d'H et $Y^3$ est un groupement carbonyle.

Selon un mode de réalisation, le copolymère est caractérisé en ce que la masse molaire moyenne en poids (Mw) dudit copolymère est comprise entre $2.10^3$ et $5.10^4$ g/mole.

L'invention est également relative à un objet comprenant un copolymère tel que décrit précédemment.

L'invention a aussi pour objet l'utilisation de copolymères tels que décrits précédemment pour la fabrication d'objets conduisant la lumière, de revêtement, de films ou de photo masque.

L'invention vise de plus un procédé de synthèse de copolymères décrits ci-dessus, caractérisé en ce que l'on met à réagir sous atmosphère inerte :

- (a) du monomère M2 de formule ci-dessous avec $Y^1$ et $Y^2$, identiques ou différents, pris soit dans le groupe d'atomes comprenant H, F, Cl et Br, soit dans la famille des groupements carbonés comprenant de 1 à 10 atomes de carbone et avec $Y^3$ un groupement carbonyle ou un groupement carboné divalent, le taux de monomères M2 mis à réagir étant compris entre 30 et 70% molaire par rapport au total des monomères mis à réagir ; avec
- (b) un mélange de monomères M1 et M3 de formules ci-dessous,
  avec $X^1$, $X^2$ et $X^3$ identiques ou différents, pris dans le groupe d'atomes comprenant H, F, Cl et Br,
  avec $R^1$ pris dans le groupe comprenant H, F, Cl et Br,
  avec $R^2$ un groupe carboné comprenant de 1 à 10 atomes de carbone partiellement ou totalement fluorés,

ledit mélange comprenant 99 à 30% molaire de monomères M1 par rapport au total des monomères M1 et M3 et de 1 à 70% molaire de monomères M3 par rapport au total des monomères M1 et M3; en présence

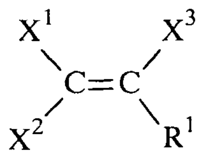

M1

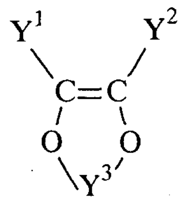

M2

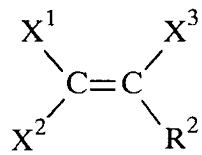

M3

- (c) d'un initiateur de polymérisation.

Selon un mode de réalisation, le procédé est caractérisé en ce que la température de la réaction de synthèse est située entre 40 et 120°C.
Selon un mode de réalisation, le procédé est caractérisé en ce que la réaction de synthèse a lieu à une pression située entre 5 et 20 bars.
Selon un mode de réalisation, le procédé est caractérisé en ce que l'initiateur de polymérisation est le perpivalate de tertiobutyle.
Le copolymère selon l'invention comprend les motifs P1, P2 et P3, représentées ci-dessous.

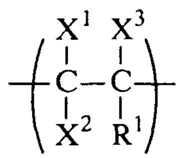

P1

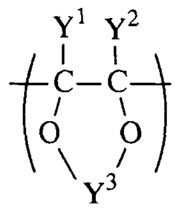

P2

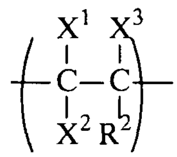

P3

Le copolymère selon l'invention comprend un ou plusieurs motifs P1, un ou plusieurs motifs P2 et un ou plusieurs motifs P3.
Le monomère M1, donnant lieu aux motifs P1, est un monomère pris dans le groupe des monomères de formule générale représentée ci-dessous, totalement ou partiellement fluorés ou alors chlorofluorés :

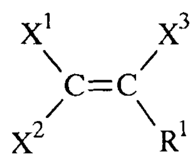

M1

avec $X^1$, $X^2$ et $X^3$, des atomes identiques ou différents, pris dans le groupe comprenant H, F, Cl et Br, de préférence F et avec $R^1$ un atome pris dans le groupe comprenant H, F, Cl et Br, de préférence F.
De préférence, on choisira les monomères M1 perfluorés ou chlorofluorés et plus particulièrement le tétrafluoroéthylène (abrégé TFE) avec $X^1=X^2=X^3=R^1=F$ et le chlorotrifluoroéthylène (abrégé CTFE) avec $X^1=X^2=X^3=F$ et $R^1=Cl$.
Le monomère M3, donnant lieu aux motifs P3, est un monomère pris dans le groupe des monomères de

formule générale représentée ci-dessous, totalement ou partiellement fluorés ou alors chlorofluorés :

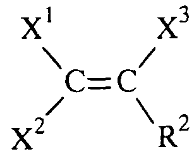

M3

avec $X^1$, $X^2$ et $X^3$, des atomes identiques ou différents, pris dans le groupe comprenant H, F, Cl et Br, de préférence F et avec $R^2$ un groupement carboné comprenant de 1 à 10 atomes de carbone partiellement ou totalement fluorés, de préférence $CF_3$.

De préférence, on choisira les monomères M3 perfluorés ou chlorofluorés et plus particulièrement l'hexafluoropropylène (abrégé HFP) avec $X^1=X^2=X^3$ =F et $R^2$ =$CF_3$.

Le monomère M2, donnant lieu aux motifs P2, est un monomère de structure cyclique de formule générale suivante:

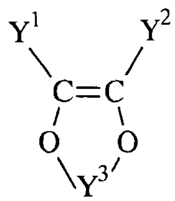

M2

avec $Y^1$ et $Y^2$, identiques ou différents, pris soit dans le groupe d'atomes comprenant H, F, Cl et Br, soit dans la famille des groupements carbonés comprenant de 1 à 10 atomes de carbone. A titre d'exemple, on peut citer les composés dont $Y^1=Y^2$=F, dont $Y^1$=H et $Y^2$=Cl, dont $Y^1$=H et $Y^2$=F, dont $Y^1$=H et $Y^2$=H et les composés dont $Y^1$ =Cl et $Y^2$=Cl, avec $Y^3$ soit un groupement carbonyle, soit un groupement carboné divalent.

De préférence, le monomère M2 est le vinylène carbonate (abrégé VCA)
dans lequel $Y^3$ est un groupement carbonyle et $Y^1$ et $Y^2$ sont des atomes d'hydrogène.

Comme procédé permettant d'obtenir le copolymère, on peut utiliser tout procédé de polymérisation connu de l'homme de l'art utilisant un milieu solvant organique, ou une dispersion dans une phase aqueuse, par exemple en suspension ou en émulsion. On préférera, généralement, travailler en milieu solvant afin de favoriser un mélange intime des différents monomères.

Parmi les solvants couramment utilisés, on peut citer l'acétate d'éthyle, de méthyle ou encore de butyle, les solvants chlorofluorés comme le F141b® ($CFCl_2$-$CH_3$) ou le F113® ($CF_2Cl$-$CFCl_2$).

Comme initiateur de polymérisation, on peut employer des générateurs de radicaux libres tels que les dérivés peroxydes, hydroperoxydes, percarbonate ou encore des composés azo comme l'azoisobutyronitrile (AIBN). On peut également, dans les cas de procédés menés en milieu aqueux, utiliser des générateurs de radicaux libres inorganiques comme les persulfates ou des combinaisons dites rédox.

La température de polymérisation est dictée, en général, par la vitesse de décomposition du système initiateur choisi et est, en général, située entre 0 et 200°C de préférence entre 40 et 120°C.

La pression est, en général, comprise entre la pression atmosphérique et une pression de 100 bars, plus particulièrement entre 2 bars et 20 bars.

Afin de mieux contrôler la composition ou la masse molaire du polymère, il est également possible d'introduire en tout ou partie les monomères ainsi que l'initiateur de polymérisation de façon continue ou par fraction au cours de la polymérisation.

Le polymère selon l'invention possède une température de transition vitreuse (Tg) située entre 60 et 160°C, de préférence entre 80 et 140°C. Cette température de transition vitreuse est principalement liée à la teneur en motifs

P2 présents dans le copolymère. La transparence du polymère obtenu dépend également de la teneur en motifs P2.

La teneur en motifs P2 peut varier dans le copolymère en fonction de la nature de $R^1$ de P1 et $R^2$ de P3. Pour $R^1$=F ou Cl dans P1 et $R^2=CF_3$ dans P3, la teneur en motifs P2 dans le copolymère est comprise entre sensiblement 30 et 70 % molaire. La teneur en motifs P1 et P3 est donc comprise entre sensiblement 70 et 30% molaire dans le copolymère.

Dans le cas de la copolymérisation de monomères M1=TFE et M3=HFP ou M1=CTFE et M3=HFP, la teneur en HFP est comprise entre 1 et 70% molaire (de préférence entre 5 et 50% molaire) par rapport au total des monomères M1 et M3 et la teneur en TFE ou CTFE est comprise entre 99 et 30% molaire de monomères M1 par rapport au total de monomères M1 et M3.

La solubilité du copolymère dans les diluants réactifs est conditionnée par sa composition, ainsi la copolymérisation de monomères M1, M2 et M3 est avantageuse par rapport à la polymérisation d'un monomère M1 avec un monomère M2 (en absence de monomères M3) ou d'un monomère M3 avec un monomère M2 (en absence de monomères M1). On peut citer les combinaisons de monomères TFE/HFP/VCA et CTFE/HFP/VCA comme particulièrement favorables pour l'obtention d'une solubilité élevée, cette dernière propriété étant mise en évidence par la possibilité de dissoudre au moins 40% en poids de copolymère dans une large gamme de mélange de diluants réactifs.

La solubilité du polymère dans les diluants réactifs dépend également de sa masse molaire moyenne en poids (Mw) qui doit être comprise entre $10^3$ et $10^6$ g /mole et de préférence entre 2 .$10^3$ et 5.$10^4$ g/mole.

L'invention concerne également une fibre optique plastique à gradient d'indice ou à saut d'indice comprenant un copolymère selon l'invention, ainsi qu'un procédé de fabrication d'une telle fibre choisi parmi un procédé de type UV, un procédé de type préforme et un procédé de type co-extrusion.

Nous allons maintenant illustrer l'invention en présentant des exemples non limitatifs de réalisation de l'invention. Nous présentons ici des exemples de terpolymères CTFE/VCA/HFP mais des terpolymères TFE/VCA/HFP ont également été réalisés conduisant aux même conclusions.

Dans les figures suivantes :

- La figure 1 représente schématiquement un dispositif permettant de fabriquer une fibre optique plastique à partir des copolymères selon la présente invention,
- La figure 2 montre les spectres d'atténuation d'une fibre optique plastique à gradient d'indice obtenue à partir de procédés de l'art antérieur et d'un procédé selon l'un des modes de réalisation de fibre optique plastique à partir des copolymères selon l'invention.

Les réactifs, initiateurs et solvants utilisés sont abrégés :

**CTFE :** chlorotrifluoroéthylène $CF_2$=CFCl
**TFE :** tétrafluoroéthylène $CF_2=CF_2$
**HFP :** hexafluoropropylène
**VCA :** carbonate de vinylène
**TBPP :** perpivalate de tertiobutyle, à 75 % en masse dans l'isododécane
**AE :** acétate d'éthyle
**ATRIFE**: acrylate de trifluoroéthyle
**HDDA :** hexanediol diacrylate
**PEPC :** 4-(1-propenyloxymethyl)-1,3-dioxolan-2-one
**NVP :** N-vinyl pyrolidone

La proportion molaire d'HFP par rapport au CTFE dans le polymère final a été déterminée par RMN $^{19}$F suivant la relation :

$$\% \text{ molaire HFP/CTFE} = I1 / (I2 + I1/3) / 100$$

I1: aire de la résonance du groupement $CF_3$ de l'HFP
I2: aire des résonances des groupements $CF_2$ de l'HFP et du CTFE et du groupement CF du CTFE

Les Mw (masse molaire moyenne en poids) sont déterminées par analyse CES (chromatographie d'exclusion stérique). On utilise un appareillage de la société Spectra Physic « Winner Station ». La détection est effectuée par indice de réfraction. La colonne est une colonne mixed C PL gel de 5 microns de la société Polymer Laboratory et le solvant utilisé est le THF à un débit de 0,8 ml/min. Les masses molaires moyenne en poids (Mw) sont exprimées en

g.moles-[1] par rapport à un standard polystyrène.

Les Tg (température de transition vitreuse) sont déterminées par calorimétrie différentielle à balayage (DSC en anglais). On effectue une première montée en température à 20°C par minute suivie d'un refroidissement puis une deuxième montée en température au cours de laquelle sont relevées les Tg (température de transition vitreuse) ou les Tf (température de fusion). La plage de température est de 50°C à 200°C si la Tg est supérieure à 60°C.

**Comparatif 1** - Composition initiale: CTFE/VCA - 40/60 molaire

On opère dans un autoclave de 1,2 litre en acier inoxydable. On introduit dans le réacteur 355g de solution contenant 115 g (soit 1.33 moles ) de VCA et 240 g (soit 2.73 moles ) d'AE. Le réacteur est ensuite fermé et purgé trois fois avec 20 bars d'azote. On introduit par aspiration dans le réacteur sous vide 105 g (soit 0.9 mole) de CTFE. On introduit ensuite à l'aide d'une pompe une solution contenant 3.88 g ( soit 22.3 mmoles ) d'initiateur TBPP dans 25g ( soit 0.284 mole ) d'AE. Le milieu réactionnel est chauffé à 85 °C pendant 3 heures sous agitation avec une pression initiale d'environ 8 bars.

En fin de réaction, on obtient une solution de polymère dans l'AE ayant un extrait sec de 45%. On ajoute à cette solution 220 g de méthanol. Le mélange solution de polymère-méthanol est ensuite précipité dans 4 litres d'eau glacée. Le polymère précipité est filtré puis séché 48 h en étuve à 50°C jusqu'à poids constant.

On isole ainsi 203.5 g de polymère sec sous la forme d'une poudre blanche.

**Exemple 2** - Composition initiale: CTFE/VCA/HFP - 38.1/56.9/5 molaire

On opère dans un autoclave de 1,2 litres en acier inoxydable. On introduit dans le réacteur 311g de solution contenant 105.5 g (soit 1.22 moles ) de VCA et 206 g (soit 2.34 moles ) d'AE. Le réacteur est ensuite fermé et purgé trois fois avec 20 bars d'azote. On introduit par aspiration dans le réacteur sous vide 95 g (soit 0.82 mole ) de CTFE, puis 16.2g ( soit 0.11 moles) d'HFP. On introduit ensuite à l'aide d'une pompe une solution contenant 3.75 g ( soit 21.23 mmoles ) d'initiateur TBPP dans 40.8g ( soit 0.463 mole ) d'AE. Le milieu réactionnel est chauffé à 85 °C pendant 3 heures sous agitation avec une pression initiale d'environ 8 bars.

En fin de réaction, on obtient une solution de polymère dans l'AE ayant un extrait sec proche de 45%. On ajoute à cette solution 207 g de méthanol. Le mélange solution de polymère-méthanol est ensuite précipité dans 4 litres d'eau glacée. Le polymère précipité est filtré puis séché 48 h en étuve à 50°C jusqu'à poids constant.

On isole ainsi 187.44 g de polymère sec sous la forme d'une poudre blanche.

**Exemple 3** - Composition initiale : CTFE/VCA/HFP - 37.3/55.7/7 molaire

On opère selon le même protocole expérimental et avec les mêmes réactifs que dans l'exemple 2.

Les proportions initiales de réactifs sont modifiées pour augmenter la proportion d'HFP dans le polymère final tout en conservant un rapport molaire VCA/CTFE proche de 2/3. La proportion molaire d'amorceur par rapport à la somme des monomères est maintenue constante et la quantité d'AE est ajustée de manière à conserver un extrait constant au voisinage de 45%.

Les quantités de réactifs et de solvant utilisées sont les suivantes :

- VCA = 105.5g (1.22 mole)
- CTFE = 95 g (0.82 mole)
- HFP = 23 g (0.16 mole)
- AE total = 269.4 g ( 227 g pour dissoudre le VCA et 42.4 g pour dissoudre l'amorceur)
- TBPP = 3.8 g (21.81 mmole)

On obtient ainsi 188.8 g de polymère sec sous la forme d'une poudre blanche.

**Exemple 4** - Composition initiale : CTFE/VCA/HFP - 35.7/53.3 /11 molaire

On opère selon le même protocole expérimental et avec les mêmes réactifs que dans l'exemple 2.

Les proportions initiales de réactifs sont modifiées pour augmenter la proportion d'HFP dans le polymère final tout en conservant un rapport molaire CTFE/VCA proche de 2/3. La proportion molaire d'amorceur par rapport à la somme des monomères est maintenue constante et la quantité d'AE est ajustée de manière à conserver un extrait constant au voisinage de 45%.

Les quantités de réactifs et de solvant utilisées sont les suivantes :

- VCA = 94.35g (1.09 mole)
- CTFE = 85 g (0.73 mole)
- HFP = 33.8 g (0.23 mole)
- AE total = 256.5 g ( 217 g pour dissoudre le VCA et 39.5 g pour dissoudre l'amorceur)
- TBPP = 3.55 g (20.37 mmole)

On obtient ainsi 174.8 g de polymère sec sous la forme d'une poudre blanche.

<u>**Exemple 5**</u> - Composition initiale : CTFE/VCA/HFP - 32.1/47.9 /20 molaire

On opère selon le même protocole expérimental et avec les mêmes réactifs que dans l'exemple 2.

Les proportions initiales de réactifs sont modifiées pour augmenter la proportion d'HFP dans le polymère final tout en conservant un rapport molaire VCA/CTFE proche de 2/3. La proportion molaire d'amorceur par rapport à la somme des monomères est maintenue constante et la quantité d'AE est ajustée de manière à conserver un extrait constant au voisinage de 45%.

Les quantités de réactifs et de solvant utilisées sont les suivantes :

- VCA = 83.25g (0.96 mole)
- CTFE = 75 g (0.64 mole)
- HFP = 60.3 g (0.41 mole)
- AE total = 264 g ( 224 g pour dissoudre le VCA et 40 g pour dissoudre l'amorceur)
- TBPP = 3.5 g (20.09 mmole)

On obtient ainsi 170.5 g de polymère sec sous la forme d'une poudre blanche
Le **TABLEAU 1** indique le % molaire d'HFP par rapport au CTFE dans l'oligomère obtenu selon le mode opératoire utilisé dans les exemples 2, 3, 4, 5 (abrégés Ex2-5) et le comparatif 1 (Cp1) décrits ci-dessus ainsi que le rendement de polymérisation, la Tg (température de transition vitreuse), la Tf (température de fusion) et la masse molaire moyenne en poids.

## <u>TABLEAU 1</u>

| | Proportion d'HFP dans l'oligomère (% molaire par rapport au CTFE) | Rendement de polymérisation (% en poids) | Tg (°C) | Tf (°C) | Mw (g/mole) |
|---|---|---|---|---|---|
| Cp1 | 0 | 923 | 123 | Pas de fusion | 4600 |
| Ex2 | 2.1 | 87 | 120 | Pas de fusion | 5460 |
| Ex3 | 4.1 | 85 | 120 | Pas de fusion | 5500 |
| Ex4 | 4.8 | 82 | 122 | Pas de fusion | 5940 |
| Ex5 | 10.4 | 78 | 120 | Pas de fusion | 4950 |

Les oligomères obtenus dans les exemples ci-dessus ont été mis en solution dans différents mélanges de diluant réactif, à raison de 1 équivalent en poids d'oligomère pour 1 équivalent en poids de mélange de diluants.

La composition des mélanges de diluants réactifs, ainsi que les résultats des tests de solubilité sont reportés dans le **TABLEAU 2**. Les tests de solubilité dans les diluants réactifs sont pratiqués à température ambiante sous agitation. Les observations sur le comportement en solution sont réalisées après 60 heures.

Les lettres dans le **TABLEAU 2** signifiant:

a = non soluble
b = soluble mais trouble
c = soluble et transparent à un % en poids d'oligomère/diluant de 30/70
d = soluble et transparent

## TABLEAU 2

| | Mélanges de diluants réactifs | | | | | | | |
|---|---|---|---|---|---|---|---|---|
| | HDDA/ATRIFE | | NVP/ATRIFE | | | PEPC/ATRIFE | | |
| proportions | 1/1 | 1/2 | 2/1 | 1/1 | 1/2 | 2/1 | 1/1 | 1/2 |
| Cp1 | b | b | a | b | a | a | b | b |
| Ex2 | d | d | b | b | b | d | d | d |
| Ex3 | d | d | d | c | d | d | d | d |
| Ex4 | d | d | c | c | c | d | c-d | d |
| Ex5 | d | d | c | c | d | d | d | d |

On va maintenant décrire la fabrication de fibre optique plastique à partir des copolymères selon l'invention décrits ci-dessus.

Selon un premier type de procédé, dit procédé UV et décrit en détail dans le document EP-1 067 222, permettant d'obtenir une fibre optique à gradient d'indice, c'est-à-dire dont l'indice varie continûment de l'axe à la périphérie de la fibre, une fois le copolymère C obtenu par exemple selon l'un des exemples décrits ci-dessus, on prépare deux compositions C1 et C2.

Les deux compositions C1 et C2 sont différentes, et comportent chacune un photo-amorceur commercial, le copolymère de l'un des exemples 2 à 5 ci-dessus, et un diluant réactif composé de deux monomères en proportions différentes selon la composition, les deux monomères étant D1 et D2.

Le photo-amorceur peut être par exemple une $\alpha$-hydroxycétone (IRGACURE 184, DAROCUR 1173), une mono acyl phosphine (DAROCUR TPO) ou une bis acyl phosphine (IRGACURE 819).

D1 et D2 peuvent être des monomères possédant au moins une fonction acrylique, méthacrylique, $\alpha$-fluoroacrylique, $\alpha,\beta$-difluoroacrylique ou vinylique comportant des groupements halogénés (fluorés et chlorés).

Le TABLEAU 3 ci-après résume la constitution et les propriétés des compositions C1 et C2, préparées à partir du mélange de copolymère de l'exemple 5, le diluant réactif D1 étant l'acrylate de trifluoroéthyle (dont l'indice de

réfraction est égal à 1,342 à 20°C), et le diluant réactif D2 étant le méthacrylate de trifluoroéthyle (dont l'indice de réfraction est égal à 1,457 à 20°C). Le photo-amorceur est de la classe des bis acyl phosphines (BAPO - IRGACURE 819). Les quantités sont calculées pour 700 grammes de composition.

TABLEAU 3

| Composition | Quantité de D1 (en g) | Quantité de D2 (en g) | Quantité de C (en g) |
|---|---|---|---|
| C1 | 105 | 98 | 240 |
| C2 | 189 | 0 | 251 |

On voit que le rapport, en % poids, du copolymère C sur la somme des constituants de chaque composition est constant, tandis qu'au sein du diluant réactif la proportion relative, en % massique de D1 par rapport à la somme de D1 et D2, varie d'une composition à l'autre. Ceci permet de contrôler la viscosité des deux compositions tout en faisant varier l'indice de réfraction de chacune de ces compositions.

De manière avantageuse, pour faciliter la mise en oeuvre des compositions ci-dessus et l'obtention de la fibre (miscibilité de C, viscosité et réactivité des résines, propriétés mécaniques finales du matériau, etc...), on peut ajouter dans chacun des mélanges du TABLEAU 3 un diluant additionnel D3, qui n'intervient pas dans le réglage de l'indice de réfraction. Ce diluant D3 est par exemple et de manière non limitative un diluant réactif hydrogéné, composé de 40% en poids de triméthylol propane triacrylate (TMPTA) et de 60% en poids de propylène glycol (200) diacrylate (PEG-200 DA). Pour les deux compositions C1 et C2 figurant ci-dessus, la masse de D3 pour 700 grammes de composition est de l'ordre de 260 g.

Selon le procédé décrit dans le document EP-1 067 222, pour réaliser une fibre à gradient d'indice, on crée la variation d'indice continue par réalisation d'un mélange actif des deux compositions C1 et C2 de départ. Pour cela, la mise en oeuvre du procédé se fait par un moyen de mélange qui peut être un mélangeur de type statique ou dynamique. Cette mise en oeuvre est expliquée en détail dans le document EP-1 067 222 qui est incorporé ici par référence. On ne reviendra donc pas plus ici sur le fonctionnement du mélangeur statique ou dynamique utilisé dans le procédé, et l'on se contentera de décrire simplement ce procédé dans sa mise en oeuvre à l'aide de l'un des mélangeurs statiques décrits dans le document EP-1 067 222.

La figure 1 représente une vue en coupe très schématique, dans un plan comprenant un axe central X, d'un dispositif de fabrication d'une fibre optique selon le procédé de l'invention.

Le dispositif 10 comprend un mélangeur 1 statique. Les compositions C1 et C2 du tableau ci-dessus y sont mélangées.

Le mélange ainsi obtenu est amené à la filière 15. Cette variation homothétique permet de conserver la forme de la variation de concentration des compositions C1 et C2.

En sortie de filière 15, le fil obtenu, qui est une fibre optique plastique à gradient d'indice 6, est étiré par un cabestan 10. Selon un mode de réalisation, la fibre optique plastique 6 est durcie par photo-réticulation à l'aide d'une source 7 de rayons ultra-violets (UV) en une fibre optique plastique polymérisée 9. Puis, au moyen du cabestan 10, la fibre optique plastique 9 est enroulée sur une bobine 11. Le diamètre de la fibre 9 est donné par la filière 15, mais il peut être affiné selon la force de le filage réalisé au moyen du cabestan 10. On peut utiliser indifféremment l'une des fibres optiques plastiques 6 ou 9 en tant que produit fini selon l'invention.

La fibre ainsi obtenue est donc une fibre à gradient d'indice, mais le procédé ci-dessus peut également permettre d'obtenir une fibre à saut d'indice, c'est-à-dire dont l'indice de réfraction varie de manière discontinue entre l'axe de la fibre et la périphérie. Dans ce cas, on ne procède pas au mélange actif des compositions C1 et C2. C1 et C2 sont alors introduites dans un pot répartiteur prolongé d'une filière, où le diamètre final de la fibre et la proportion de coeur et de gaine sont gouvernés par la pression et la température des compositions C1 et C2 ainsi que par le diamètre de la filière.

Les copolymères selon l'invention permettent également d'obtenir des fibres optiques plastiques par d'autres types de procédés.

Ainsi, pour fabriquer une fibre optique plastique à gradient d'indice, on peut utiliser un procédé tel que celui décrit dans le document US-6 071 441, dit procédé préforme.

Selon un exemple de mise en oeuvre, pour la fabrication de la préforme, 100 g de copolymère C du type copolymère CTFE/VCA/HFP de masse molaire moyenne supérieure à $10^5$ g/mole sont fondus à une température comprise entre 200 et 250°C dans un tube cylindrique en verre, sans le remplir entièrement de sorte qu'un espace vacant est ménagé dans le tube contenant le copolymère C avant de sceller celui-ci sous vide. Le tube en verre est alors placé en position horizontale dans un four. Il est ensuite soumis à un mouvement de rotation autour de son axe horizontal (dont la vitesse est fixée à 2 000 tours/minute), et le four est porté à une température telle que la viscosité du copolymère C fondu est comprise entre $10^3$ et $10^5$ poise, pendant trois heures. Le tube est ensuite refroidi progressivement pendant une heure. Le corps tubulaire ainsi obtenu a un diamètre extérieur de 17 mm et un diamètre intérieur de 5 mm, et son indice de réfraction est de 1,45.

Un dopant D est alors introduit dans la partie centrale de ce corps tubulaire, toujours dans le tube de verre. Sa proportion est de ... en poids par rapport au copolymère C. Pour que le dopant soit adapté au matériau utilisé, il est préférable qu'il remplisse les deux conditions suivantes:

son indice de réfraction n est supérieur à celui du copolymère C
la différence des paramètres de solubilité du copolymère C et du dopant D est inférieure ou égale à 7 $(cal/cm^3)^{½}$.

Le Tableau 4 suivant rassemble quelques exemples de composés pouvant être en mesure d'être utilisés en tant que dopant D pour cette application.

TABLEAU 4

| Dopant D | n | d $(cal/cm^3)^{1/2}$ |
|---|---|---|
| Benzyl phtalate-n-butyl | 1.575 | 9.64 |
| 1-methoxyphenyl-1-phényléthane | 1.571 | 9.74 |
| Benzylbenzoate | 1.568 | 10.7 |
| Bromobenzene | 1.557 | 9.9 |
| o-dichlorobenzene | 1.551 | 10.0 |
| m-dichlorobenzene | 1.543 | 9.9 |
| 1,2-dibromoethane | 1.538 | 10.4 |

L'ensemble est de nouveau mis en rotation dans un four. Le dopant D diffuse thermiquement à travers le copolymère C fondu pendant 6 heures. Le four est enfin progressivement refroidi à une vitesse de 15°C/heure jusqu'à température ambiante. Un corps tubulaire de 17 mm de diamètre extérieur et de 4,5 mm de diamètre intérieur est obtenu avec un profil à gradient d'indice de réfraction.

Ce corps tubulaire, constituant la préforme de la fibre optique plastique à gradient d'indice, est placé dans un four d'étirage à une température comprise entre 200 et 250°C. Sa partie supérieure est reliée à une pompe à vide pendant l'étape de filage. De cette façon, la préforme se rétreint et une fibre optique à gradient d'indice de réfraction est récupérée. Ses dimensions dépendent de la vitesse de filage, de préférence comprise entre 5 et 10 m/min et de la température du four.

Avantageusement, l'utilisation de copolymères C selon l'invention, ayant une température de transition vitreuse supérieure à celles du PMMA ou du CYTOP, matériaux classiquement utilisés dans le procédé « préforme » connu, conduit à des fibres ayant une transparence équivalente ou supérieure à celles obtenues avec les matériaux classiques. Ceci est illustré en figure 2, où est représentée en fonction de la longueur d'onde en nm, l'atténuation (en dB/km) d'une fibre optique plastique à gradient d'indice obtenue selon le procédé qui vient d'être décrit, à partir de polymère CYTOP de l'art antérieur (courbe 21), de polymère PMMA de l'art antérieur (courbe 22) et de polymère CTFE/VCA/HFP (51/34/10) selon l'invention (courbe 23).

Pour fabriquer des fibres optiques plastiques à saut d'indice, on peut procéder par exemple par filage d'un copolymère C selon l'invention, par exemple obtenu selon l'un des exemples ci-dessus, à l'état fondu, et dépôt simultané d'une résine photoréticulable d'indice de réfraction inférieur à celui du copolymère C, cette résine étant ensuite photopolymérisée. L'épaisseur de la couche de résine ainsi déposée est par exemple de l'ordre de 100 µm.

On peut de manière alternative, pour fabriquer une fibre optique plastique à saut d'indice, procéder par coextrusion du copolymère C avec un polymère d'indice de réfraction inférieur à celui du copolymère C, comme par exemple le PVDF, le Teflon ® AF de du Pont de Nemours ou encore le Hyflon AD ® de la société AUSIMONT.

Les deux derniers procédés mentionnés sont en tant que tels bien connus de l'homme de l'art et ne seront pas décrits plus en détail ici.

Bien entendu, les procédés de fabrication de fibres optiques plastiques mentionnés ci-dessus ne sont pas limités aux modes de réalisation qui viennent d'être décrits.

Ainsi, on pourra utiliser comme dispositif pour mettre en oeuvre le procédé UV pour la fabrication de fibres optiques à gradient d'indice tout dispositif adapté pour effectuer le mélange actif, et notamment, mais non exclusivement, ceux décrits dans le document EP-1 067 222.

En outre, les compositions et exemples donnés ne le sont qu'à titre indicatif, et l'on pourra les modifier sans sortir du cadre de l'invention du moment que le copolymère C conserve les caractéristiques générales mentionnées

plus haut.

Enfin, on pourra remplacer tout moyen par un moyen équivalent sans sortir du cadre de l'invention.

## Revendications

1. Copolymère comprenant au moins 3 motifs P1, P2 et P3 de formules générales suivantes :

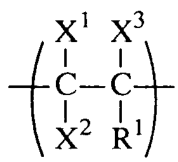
P1

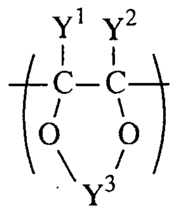
P2

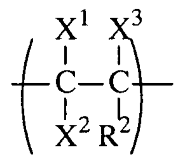
P3

avec $X^1$ , $X^2$ et $X^3$ identiques ou différents, pris dans le groupe d'atomes comprenant H, F, Cl et Br ;
avec $R^1$ pris dans le groupe d'atomes comprenant H, F, Cl et Br ;
avec $R^2$ un groupement carboné comprenant de 1 à 10 atomes de carbone partiellement ou totalement fluorés ;
avec $Y^1$ et $Y^2$, identiques ou différents, pris soit dans le groupe d'atomes comprenant H, F, Cl et Br, soit dans la famille des groupements carbonés comprenant de 1 à 10 atomes de carbone ;
avec $Y^3$ un groupement carbonyle ou un groupement carboné divalent ;
la teneur en motif P2 dans le copolymère étant comprise entre 30 et 70% molaire pour respectivement une teneur en motifs P1 et P3 dans le copolymère comprise entre 70 et 30% molaire et la masse molaire moyenne en poids (Mw) dudit copolymère étant comprise entre $10^3$ et $10^6$ g/mole.

2. Copolymère selon la revendication 1, **caractérisé en ce que** ladite teneur en motifs P1 et P3 est telle qu'elle comprend de 99 à 30% molaire de motifs P1 avec $R^1$ un atome de F ou Cl pour 1 à 70% molaire de motifs P3 avec $R^2$ un groupe $CF_3$.

3. Copolymère selon la revendication 2, **caractérisé en ce que** ladite teneur en motifs P1 et P3 est telle qu'elle comprend de 95 à 50% molaire de motifs P1 avec $R^1$ un atome de F ou Cl pour 5 à 50% molaire de motifs P3 avec $R^2$ un groupe $CF_3$.

4. Copolymère selon l'une des revendications 1 à 3, **caractérisé en ce que** $X^1=X^2=X^3=F$.

5. Copolymère selon l'une des revendications 1 à 4, **caractérisé en ce que** $Y^1$ et $Y^2$ sont des atomes d'H et $Y^3$ est un groupement carbonyle.

6. Copolymère selon l'une des revendications 1 à 5, **caractérisé en ce que** la masse molaire moyenne en poids (Mw) dudit copolymère est comprise entre $2.10^3$ et $5.10^4$ g/mole.

7. Objet comprenant un copolymère selon l'une des revendications 1 à 6.

8. Utilisation de copolymère selon l'une des revendications 1 à 6 pour la fabrication d'objets conduisant la lumière, de revêtement, de films ou de photo masque.

9. Procédé de synthèse du copolymère selon l'une des revendications 1 à 6 **caractérisé en ce que** l'on met à réagir sous atmosphère inerte

   - (a) du monomère M2 de formule ci-dessous avec $Y^1$ et $Y^2$, identiques ou différents, pris soit dans le groupe d'atomes comprenant H, F, Cl et Br, soit dans la famille des groupements carbonés comprenant de 1 à 10 atomes de carbone et avec $Y^3$ un groupement carbonyle ou un groupement carboné divalent, le taux de monomères M2 mis à réagir étant compris entre 30 et 70% molaire par rapport au total des monomères mis à réagir; avec

- (b) un mélange de monomères M1 et M3 de formules ci-dessous,

  avec $X^1$, $X^2$ et $X^3$ identiques ou différents, pris dans le groupe d'atomes comprenant H, F, Cl et Br,

  avec $R^1$ pris dans le groupe comprenant H, F, Cl et Br, et

  avec $R^2$ un groupe carboné comprenant de 1 à 10 atomes de carbone partiellement ou totalement fluorés,

  ledit mélange comprenant 99 à 30% molaire de monomères M1 par rapport au total des monomères M1 et M3 et de 1 à 70% molaire de monomères M3 par rapport au total des monomères M1 et M3; en présence

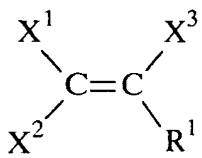

M1

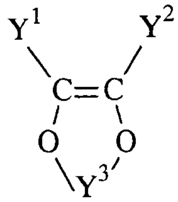

M2

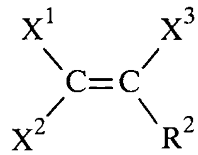

M3

- (c) d'un initiateur de polymérisation.

**10.** Procédé selon la revendication 9, **caractérisé en ce que** la température de la réaction de synthèse est située entre 40 et 120°C.

**11.** Procédé selon l'une des revendications 9 ou 10, **caractérisé en ce que** la réaction de synthèse a lieu à une pression située entre 5 et 20 bars.

**12.** Procédé selon l'une des revendications 9 à 11, **caractérisé en ce que** l'initiateur de polymérisation est le perpivalate de tertiobutyle.

**13.** Fibre optique plastique à gradient d'indice **caractérisée en ce qu'**elle comprend un copolymère selon l'une des revendications 1 à 6.

**14.** Fibre optique plastique à saut d'indice **caractérisée en ce qu'**elle comprend un copolymère selon l'une des revendications 1 à 6.

**15.** Procédé de fabrication d'une fibre optique plastique selon l'une des revendications 13 ou 14 **caractérisé en ce qu'**il est choisi parmi un procédé de type UV, un procédé de type préforme et un procédé de type coextrusion.

FiG. 1

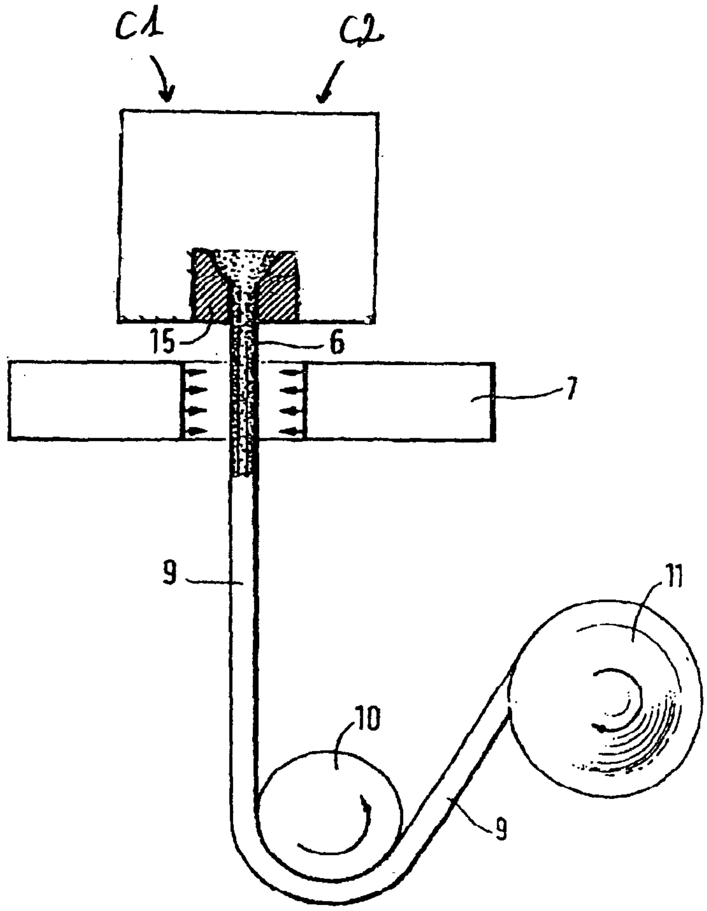

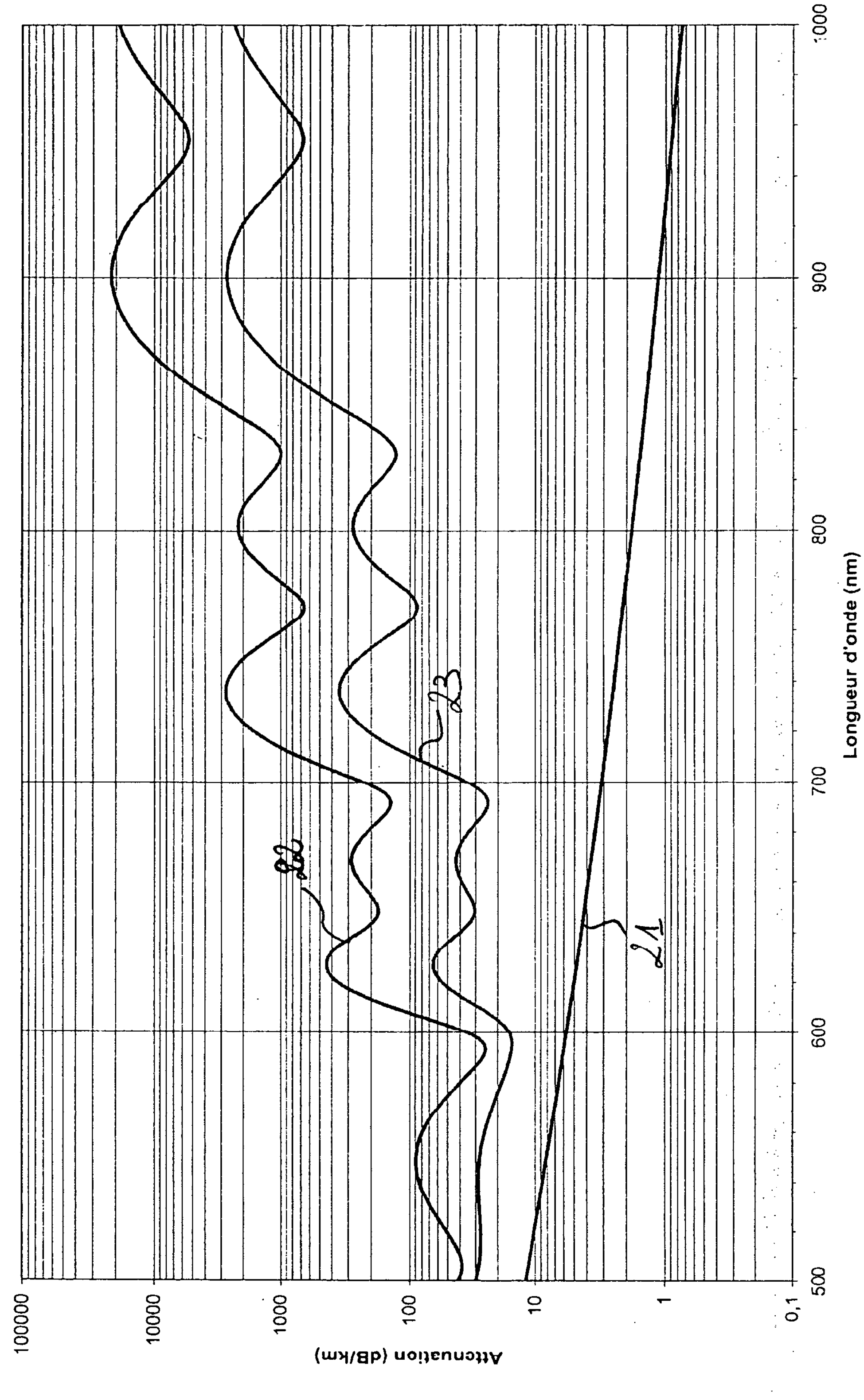
Attenuation (dB/km)
100000
10000
1000
100
10
1
0,1
Longueur d'onde (nm)
500
600
700
800
900
1000
21
22
23

FIG. 2

Office européen des brevets

# RAPPORT DE RECHERCHE EUROPEENNE

Numéro de la demande
EP 04 29 1182

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | WO 01/37043 A (FRENCH ROGER HARQUAIL ;ZUMSTEG FREDRICK CLAUS JR (US); DU PONT (US) 25 mai 2001 (2001-05-25)<br>* page 3, ligne 22 - ligne 35 *<br>* page 24, ligne 12 - page 25, ligne 22 *<br>* exemple 18 *<br>* revendications 1,2,15,18 *<br>----- | 1-8, 13-15 | C08F234/02<br>C08F214/18<br>C08F214/28 |
| Y | WO 01/32726 A (DURALI MEHDI ;AMIN SANAYEI RAMIN (US); ATOFINA CHEM INC (US)) 10 mai 2001 (2001-05-10)<br>* page 6, ligne 16 - page 7, ligne 3 *<br>* page 9, ligne 25 - ligne 29 *<br>* page 13, ligne 18 - ligne 26 *<br>* exemples 10-21 *<br>----- | 1-8, 13-15 | |
| A | US 6 486 280 B1 (FARNHAM WILLIAM BROWN ET AL) 26 novembre 2002 (2002-11-26)<br>* colonne 2, ligne 38 - ligne 67 *<br>* colonne 5, ligne 1 - ligne 39 *<br>* exemples 95,111 *<br>----- | 1-15 | DOMAINES TECHNIQUES RECHERCHES (Int.Cl.7)<br>C08F |

Le présent rapport a été établi pour toutes les revendications

| Lieu de la recherche | Date d'achèvement de la recherche | Examinateur |
|---|---|---|
| La Haye | 2 septembre 2004 | Denis, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 04 29 1182

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-09-2004

| Document brevet cité au rapport de recherche | Date de publication | Membre(s) de la famille de brevet(s) | Date de publication |
|---|---|---|---|
| WO 0137043 A | 25-05-2001 | CN 1391664 T | 15-01-2003 |
| | | EP 1238309 A1 | 11-09-2002 |
| | | EP 1238310 A1 | 11-09-2002 |
| | | JP 2003514955 T | 22-04-2003 |
| | | JP 2003514956 T | 22-04-2003 |
| | | WO 0137043 A1 | 25-05-2001 |
| | | WO 0137044 A1 | 25-05-2001 |
| | | US 6770404 B1 | 03-08-2004 |
| WO 0132726 A | 10-05-2001 | CN 1327455 T | 19-12-2001 |
| | | EP 1144469 A1 | 17-10-2001 |
| | | JP 2003514036 T | 15-04-2003 |
| | | WO 0132726 A1 | 10-05-2001 |
| | | US 6586547 B1 | 01-07-2003 |
| | | US 2003054884 A1 | 20-03-2003 |
| US 6486280 B1 | 26-11-2002 | US 6133389 A | 17-10-2000 |
| | | US 5637663 A | 10-06-1997 |
| | | US 5663255 A | 02-09-1997 |
| | | US 5478905 A | 26-12-1995 |
| | | CN 1326996 A | 19-12-2001 |
| | | CN 1173882 A | 18-02-1998 |
| | | DE 69617048 D1 | 20-12-2001 |
| | | DE 69617048 T2 | 27-06-2002 |
| | | DE 69625336 D1 | 23-01-2003 |
| | | DE 69625336 T2 | 11-09-2003 |
| | | DE 69628340 D1 | 26-06-2003 |
| | | DE 69628340 T2 | 01-04-2004 |
| | | DE 69632693 D1 | 15-07-2004 |
| | | DE 69633024 D1 | 02-09-2004 |
| | | EP 0808335 A2 | 26-11-1997 |
| | | EP 0891994 A1 | 20-01-1999 |
| | | EP 0889066 A1 | 07-01-1999 |
| | | EP 0889028 A2 | 07-01-1999 |
| | | EP 0889067 A1 | 07-01-1999 |
| | | JP 11501685 T | 09-02-1999 |
| | | WO 9624624 A2 | 15-08-1996 |

EPO FORM P0460

Pour tout renseignement concernant cette annexe : voir Journal Officiel de l'Office européen des brevets, No.12/82